# EUROPÄISCHE PATENTSCHRIFT

(11) **EP 3 862 119 B1**
(45) Veröffentlichungstag und Bekanntmachung des Hinweises auf die Patenterteilung: **21.06.2023**
(21) Anmeldenummer: 21153750.1
(22) Anmeldetag: 27.01.2021
(51) Int. Cl.: B23B 31/107, B25D 17/08, B25B 23/00

(54) **SCHNELLWECHSELFUTTER ZUR REVERSIBLEN ARRETIERUNG EINES EINSTECKWERKZEUGS AN EINEM BEARBEITUNGSGERÄT**
QUICK-CHANGE CHUCK FOR REVERSIBLE LOCKING OF AN INSERTION TOOL ON A MACHINING APPARATUS
MANDRIN À CHANGEMENT RAPIDE POUR LE BLOCAGE RÉVERSIBLE D'UN OUTIL D'INSERTION SUR UN APPAREIL D'USINAGE

(30) Priorität: 31.01.2020 DE 102020201243
(43) Veröffentlichungstag der Anmeldung: 11.08.2021
(73) Patentinhaber: DEPRAG Schulz GmbH u. Co., 92224 Amberg (DE)
(72) Erfinder: PFEIFFER, Rolf, 92224 Amberg (DE); ROSENKRANZ, Carsten, 92284 Poppenricht (DE)
(74) Vertreter: FDST Patentanwälte

(56) Entgegenhaltungen:
- DE-U1- 9 305 463
- US-B1- 9 873 155

## Beschreibung

Die Erfindung betrifft ein Schnellwechselfutter zur reversiblen Arretierung eines Einsteckwerkzeugs an einem Bearbeitungsgerät. Ferner betrifft die Erfindung ein Bearbeitungsgerät. Des Weiteren betrifft die Erfindung ein Bearbeitungsgerätesystem, das insbesondere das Bearbeitungsgerät und das Schnellwechselfutter umfasst. Außerdem betrifft die Erfindung ein Verfahren zum Wechsel eines Einsteckwerkzeugs bei einem solchen Bearbeitungsgerätesystem.

Schnellwechselfutter für Bearbeitungsgeräte sind insbesondere aus dem Bereich von handgeführten Werkzeugen oder "Maschinen" bekannt. Bei solchen handgeführten "Maschinen" handelt es sich oft um Geräte wie Schrauber, Bohrschrauber, Bohrmaschinen, Bohrhämmer oder dergleichen. Bei Werkzeugen mit Schnellwechselfutter handelt es sich beispielsweise um Knarren, die zur Aufnahme insbesondere von Biteinsätzen dienen.

Schnellwechselfutter unterscheiden sich von herkömmlichen Spannfuttern, die für ein Verspannen von "Spannfingern" oder dergleichen am Werkzeug (vgl. Bohrmaschinen-Spannfutter) ein Verschrauben einer Mutter oder dergleichen erfordern, dadurch, dass meist nur eine formschlüssige axiale Sicherung gegen Herausfallen des Werkzeugs aus einem Abtriebselement des Bearbeitungsgeräts erfolgt. Diese formschlüssige Sicherung kann dabei meist vergleichsweise einfach freigegeben werden. Bei drehend wirkenden Bearbeitungsgeräten - also bspw. Schraubern, Bohrschraubern, Knarren und dergleichen - ist das Werkzeug üblicherweise in Drehrichtung formschlüssig mit dem Abtriebselement gekoppelt, bspw. mittels eines Polygonalprofils.

Übliche Schnellwechselfutter erfordern mehrere oder zeitlich andauernde Handgriffe oder Betätigungen eines Entriegelungselements des Schnellwechselfutters zur Entriegelung und Verriegelung des Werkzeugs. Dies kann bspw. im Bereich von Fertigungsstraßen, Fließbändern oder dergleichen zu einem Zusatzaufwand führen, der fehlerträchtig und/oder zeitintensiv sein kann.

US 9,873,155 B1 beschreibt ein Schnellwechselfutter für kreiszylindrische Werkzeugschäfte. Das Schnellwechselfutter umfasst einen hülsenartigen Gehäusekörper, einen Betätigungskörper, der parallel zu einer Werkzeugachse des Einsteckwerkzeugs gegenüber dem Gehäusekörper verschiebbar in oder an diesem gelagert und durch eine Feder gebildet ist. Außerdem umfasst das Schnellwechselfutter einen Stellkörper, der mit der Feder in kraftübertragungstechnischem Kontakt steht, durch eine Art Hülse gebildet ist und axial entlang der Werkzeugachse verschiebbar ist. Der Stellkörper dient dazu, unter manueller Längsverschiebung Einrückelemente, die durch eine Kugel gebildet sind und die zur kraftschlüssigen Halterung des Werkzeugschafts dient, aus einer Klemmstellung zu verschieben und dadurch den Werkzeugschaft zur Entnahme freizugeben.

Der Erfindung liegt die Aufgabe zugrunde, einen Werkzeugwechsel eines Einsteckwerkzeugs bei einem Bearbeitungsgerät zu verbessern.

Diese Aufgabe wird erfindungsgemäß gelöst durch ein Schnellwechselfutter mit den Merkmalen des Anspruchs 1. Ebenfalls wird diese Aufgabe erfindungsgemäß gelöst durch ein Bearbeitungsgerät mit den Merkmalen des Anspruchs 11. Des Weiteren wird diese Aufgabe erfindungsgemäß gelöst durch ein Bearbeitungsgerätesystem mit den Merkmalen des Anspruchs 12. Ferner wird diese Aufgabe erfindungsgemäß gelöst durch ein Verfahren mit den Merkmalen des Anspruchs 14. Weitere vorteilhafte und teils für sich erfinderische Ausführungsformen und Weiterbildungen der Erfindung sind in den Unteransprüchen und der nachfolgenden Beschreibung dargelegt.

Die Erfindung betrifft ein Schnellwechselfutter zur reversiblen, insbesondere axialen Arretierung eines Einsteckwerkzeugs an einem Bearbeitungsgerät. Dazu weist das Schnellwechselfutter einen hülsenartigen Gehäusekörper, einen Betätigungskörper, der parallel zu einer Werkzeugachse des (vorzugsweise bestimmungsgemäß mittels des Schnellwechselfutters gehaltenen) Einsteckwerkzeugs (d. h. insbesondere axial) gegenüber dem Gehäusekörper verschiebbar in diesem gelagert ist, und einen Stellkörper auf, der mit dem Betätigungskörper in kraftübertragungstechnischem Kontakt steht. Der Stellkörper ist dabei (insbesondere gleichermaßen wie der Betätigungskörper) parallel zur Werkzeugachse sowie um diese drehbar (d. h. insbesondere rotatorisch verstellbar) gegenüber dem Gehäusekörper verschiebbar in diesem gelagert. Außerdem ist der Stellkörper dazu eingerichtet, zumindest im bestimmungsgemäßen Montagezustand an dem Bearbeitungsgerät aufgrund seiner axialen Verschiebung wenigstens ein Einrückelement, das zur formschlüssigen, axialen Arretierung des Einsteckwerkzeugs eingerichtet ist, quer zur Werkzeugachse in eine Verriegelungsposition zu verstellen oder zur Verstellung in eine Entriegelungsposition freizugeben. Außerdem ist der Stellkörper dazu eingerichtet, bei wiederholter Axialverschiebung (insbesondere in eine Referenzrichtung) durch eine damit einhergehende Drehung um die Werkzeugachse wechselweise in einer Entriegelungsstellung, in der - zumindest im bestimmungsgemäßen Montagezustand - das oder das jeweilige Einrückelement zur Verstellung in seine Entriegelungsposition freigegeben ist, und in einer gegenüber der Entriegelungsstellung axial versetzten Verriegelungsstellung, in der - zumindest im bestimmungsgemäßen Montagezustand - das oder das jeweilige Einrückelement in seine Verriegelungsposition verstellt ist, - vorzugsweise eigenstabil - einzurasten.

Anders ausgedrückt wechselt der Stellkörper bei wiederholter Axialverstellung - insbesondere des Betätigungskörpers - zwischen einer Entriegelungsstellung und einer Verriegelungsstellung hin und her. In der Entriegelungsstellung des Stellkörpers ist dabei das oder das jeweilige Einrückelement zur Verstellung in seine Entriegelungsposition freigegeben. Die wechselweise Verrastung des Stellkörpers in der Entriegelungsstellung bzw. der Verriegelungsstellung erfolgt dabei aufgrund der mit der Axialverstellung einhergehenden Verdrehung des Stellkörpers um die Werkzeugachse.

Unter der Begrifflichkeit "eigenstabil ein- oder verrasten" wird hier und im Folgenden insbesondere verstanden, dass der Stellkörper ohne externe Betätigung nicht wieder aus seiner Entriegelungsstellung bzw. Verriegelungsstellung verstellt werden kann.

Dadurch, dass der Stellkörper bei Axialverstellung entweder in seiner Entriegelungsposition oder der Verriegelungsposition verrastet, ist vorteilhafterweise eine einfache Bedienung des Schnellwechselfutters möglich. Insbesondere ist es von Vorteil, dass der Stellkörper in seiner jeweiligen Stellung verbleibt. Zwischen der Entnahme des Einsteckwerkzeugs und der Aufnahme eines anderen Einsteckwerkzeugs ist also keine weitere Betätigung erforderlich.

In einer bevorzugten Ausführung weisen der Betätigungskörper und der Stellkörper zueinander komplementäre, schräg gegenüber der Werkzeugachse angestellte Kontaktflächen auf. Dadurch wird bei einer Axialverstellung des Betätigungskörpers in Richtung auf den Stellkörper eine schräg oder quer zur Verstellrichtung stehende Kraftkomponente auf den Stellkörper hervorgerufen, die zur Drehung des Stellkörpers führt. Mithin erfolgt die Drehung des Stellkörpers zur Verrastung in der Entriegelungsstellung bzw. Verriegelungsstellung automatisch durch die Axialverstellung des Betätigungskörpers.

In einer zweckmäßigen Ausführung ist an dem Gehäusekörper innenseitig ein Führungs- und Positionierungselement angeordnet, das die Drehung des Stellkörpers zu einem Teil des axialen Verschiebewegs des Stellkörpers unterbindet. Außerdem gibt das Führungs- und Positionierungselement zweckmäßigerweise die Entriegelungsstellung und/oder die Verriegelungsstellung des Stellkörpers axial (d. h. deren jeweiligen axialen Position, insbesondere relativ zum Gehäusekörper) vor. Mit anderen Worten bildet das Führungs- und Positionierungselement einen axialen Anschlag, mittels dessen der Stellkörper in der Entriegelungsstellung bzw. der Verriegelungsstellung gehalten wird.

Optional handelt es sich bei dem Führungs- und Positionierungselement um einen Steg oder einen Vorsprung, der innenseitig vorstehend an dem Gehäusekörper angeordnet, insbesondere von diesem (vorzugsweise einstückig, d. h. monolithisch) ausgeformt ist. Bevorzugt handelt es sich bei dem Führungs- und Positionierungselement aber um eine Art Passfeder, die separat von dem Gehäusekörper ausgebildet und mit diesem verbunden ist. Dies ist insbesondere aus fertigungstechnischer Sicht für den Fall zweckmäßig, dass der Gehäusekörper aus Metall sowie optional auch als Drehteil ausgebildet ist. Alternativ zu der Art Passfeder ist das Führungs- und Positionierungselement bspw. durch wenigstens zwei, insbesondere radial in den Gehäusekörper eingeschobene (Zylinder-) Stifte gebildet. Diese bilden insbesondere die beiden gegenüberliegenden Längsenden der Art Passfeder nach.

Bevorzugt ist der axiale Verschiebeweg des Stellkörpers sowie insbesondere auch des Betätigungskörpers bspw. durch entsprechend zugeordnete Anschläge insbesondere beidseitig begrenzt. Vorzugsweise wird hierdurch auch verhindert, dass sich der Betätigungskörper und/oder der Stellkörper von dem Gehäusekörper lösen.

In einer zweckmäßigen Weiterbildung der Ausführung mit dem Führungs- und Positionierungselement weist der Stellkörper außenseitig eine Führungskulisse auf. Diese Führungskulisse wirkt dabei mit dem Führungs- und Positionierungselement zur Verrastung des Stellkörpers in der Entriegelungsstellung bzw. der Verriegelungsstellung zusammen. Vorzugsweise handelt es sich bei der Führungskulisse um wenigstens eine Flanke eines radial zu der Werkzeugachse von einer Mantelfläche des Stellkörpers vorstehenden Vorsprungs. Diese wenigstens eine Flanke wirkt insbesondere mit einer radial zu der Werkzeugachse ausgerichteten Fläche des Führungs- und Positionierungselements, insbesondere der Passfeder zusammen.

In einer weiteren zweckmäßigen Weiterbildung ist die oder die jeweilige Kontaktfläche des Stellkörpers, die mit der korrespondierenden Kontaktfläche des Betätigungskörpers zusammenwirkt, als Teil der Führungskulisse ausgebildet.

Vorzugsweise erfolgt die Verrastung des Stellkörpers in der Entriegelungsstellung bzw. der Verriegelungsstellung entgegen einer durch externe (bspw. manuelle) Krafteinwirkung auf den Betätigungskörper bewirkten Axialverschiebung. Das heißt insbesondere, dass sich der Stellkörper zur Verrastung entgegen der vorstehend genannten Referenzrichtung einen Teil seines Verschiebewegs zurück bewegt.

Insbesondere hierfür weist das Schnellwechselfutter eine Rückstellfeder auf, die den Stellkörper gegen eine axiale Verstellung in Richtung auf die Entriegelungsstellung und die Verriegelungsstellung (d. h. insbesondere entgegen der Referenzrichtung) verspannt. Vorteilhafterweise ist also zur Verriegelung oder Entriegelung des Schnellwechselfutters nur eine (bspw. manuelle) Betätigung des Betätigungskörpers in eine Richtung (insbesondere in die Referenzrichtung) erforderlich. Die Verrastung erfolgt dabei vorzugsweise automatisch unter Wirkung der Rückstellfeder, insbesondere bei Wegfall der externen Betätigungskraft. Außerdem unterstützt die Rückstellfeder auch, dass das Schnellwechselfutter, insbesondere der Stellkörper stabil in der Entriegelungsstellung bzw. Verriegelungsstellung verbleibt.

In einer weiteren zweckmäßigen Ausführung sind der Gehäusekörper, der Betätigungskörper und der Stellkörper zumindest im Wesentlichen als hohle Rotationskörper ausgebildet. Unter "im Wesentlichen" wird im vorliegenden Zusammenhang insbesondere verstanden, dass die vorgenannten Körper Bereiche aufweisen, die einen Rotationskörper, vorzugsweise einen Kreiszylinder, bevorzugt ein kreiszylindrisches Rohr bilden, sowie Bereiche, die von einem solchen Rotationskörper abweichen. Die Grundstruktur des jeweiligen Körpers entspricht somit aber insbesondere einem solchen Rotationskörper. Anders ausgedrückt sind die vorstehend genannten Körper vorzugsweise als (hohle) Rotationskörper ausgebildet, weisen aber bereichsweise (insbesondere lokal begrenzt) Abweichungen von ihrer Rotationskörper-Struktur auf. So ist bspw. der Gehäusekörper bspw. innenseitig rotationssymmetrisch, insbesondere als Drehteil ausgebildet, ausgenommen eine Aufnahmenut für die vorstehend beschriebene Passfeder. Der Stellkörper ist dabei bspw. innenseitig rotationssymmetrisch, außenseitig aufgrund der Führungskulisse aber nicht. Im bestimmungsgemäßen Rüstzustand des Einsteckwerkzeugs wird dieses vorzugsweise ringförmig von den vorstehend genannten Körpern umgeben.

In einer bevorzugten Ausführung ist der Betätigungskörper axial zweiteilig aufgebaut. Insbesondere umfasst der Betätigungskörper in diesem Fall eine Druckhülse, die mit einem Druckende von dem Gehäusekörper vorsteht. Letzteres dient als Angriffsfläche für die Betätigungskraft. Mit der Druckhülse - insbesondere starr - verbunden ist hierbei als zweites Teil eine "Spindelhülse", an der die oder die jeweilige schräg gestellte Kontaktfläche, insbesondere als schräg eingeschnittene innenseitige Stirnkante, ausgebildet ist. Diese schräg gestellte Kontaktfläche bewirkt, bei Verschiebung der Spindelhülse in Richtung auf den Stellkörper, dessen Drehung.

Grundsätzlich ist es zwar im Rahmen der Erfindung möglich, dass der Stellkörper zur Verstellung des oder des jeweiligen Einrückelements direkt auf dieses wirkt.

Im Sinne bspw. einer vereinfachten Montage ist der Stellkörper aber zweckmäßigerweise (insbesondere axial) unterteilt in eine Drehhülse und eine Verriegelungshülse. Die Drehhülse wirkt hierbei vorteilhafterweise auf die Verriegelungshülse, die wiederum zur Verstellung des oder des jeweiligen Einrückelements direkt auf dieses wirkt. An der Drehhülse ist die oder die jeweilige (vorstehend beschriebene, zum Betätigungskörper bzw. der Spindelhülse) korrespondierende Kontaktfläche ausgebildet. Die Drehhülse wird somit - insbesondere bei Verstellung über das Führungs- und Positionierungselement hinaus - von dem Betätigungskörper, insbesondere der Spindelhülse in Drehung versetzt. Die Drehhülse weist also vorzugsweise auch die vorstehend beschriebene Führungskulisse auf. Die Verriegelungshülse steht mit dieser Drehhülse in kraftübertragungstechnischer Verbindung, ist aber vorzugsweise von der Drehhülse entkoppelt, insbesondere derart, dass auf die Verriegelungshülse keine Drehung übertragen wird. Dadurch wird vorteilhafterweise vermieden, dass die Drehung der Drehhülse auf weitere Elemente des Schnellwechselfutters übertragen wird. Die Verriegelungshülse weist bevorzugt innenseitig eine Durchmesserverringerung auf, so dass durch die axiale Verstellung der Verriegelungshülse eine schräg oder etwa radial zur Werkzeugachse gerichtete Kraft auf das oder das jeweilige - im bestimmungsgemäßen Montagezustand - zweckmäßigerweise im Bereich der Durchmesserverringerung angeordnete Einrückelement ausgeübt wird. Dadurch wird das oder das jeweilige Einrückelement in Richtung auf die Werkzeugachse verstellt, insbesondere in eine ringförmig das Einsteckwerkzeug umlaufende Arretierungsnut "eingerückt". Bei Verstellung der Drehhülse in die Entriegelungsposition wird entsprechend die Verriegelungshülse derart verschoben, dass das oder das jeweilige Einrückelement in einem Bereich der Verriegelungshülse mit vergrößertem Innendurchmesser angeordnet ist. Dadurch wird die Verstellung (Bewegung) des oder des jeweiligen Einrückelements in seine Entriegelungsposition freigegeben und das Einsteckwerkzeug kann entnommen werden.

In einer zweckmäßigen Ausführung ist das Schnellwechselfutter derart gestaltet, dass der Stellkörper, insbesondere die Drehhülse, um 60 Grad zwischen der Entriegelungsstellung und der entsprechend in Drehrichtung nachfolgenden Verriegelungsstellung verdreht wird. Anders ausgedrückt weist das Schnellwechselfutter also drei Stellungspaare - d. h. jeweils eine Entriegelungs- und eine Verriegelungsstellung - für den Stellkörper auf. Vorzugsweise sind in diesem Fall auch drei Führungs- und Positionierungselemente, insbesondere um 120 Grad zueinander versetzt, vorhanden. Eine geringere, bspw. nur zwei, oder höhere Anzahl, bspw. vier oder fünf, von Stellungspaaren ist aber ebenfalls möglich, optional vom Durchmesser des Schnellwechselfutters abhängig.

Bevorzugt weist das Schnellwechselfutter einen Außendurchmesser von 20 bis 30 Millimetern auf.

In einer weiteren zweckmäßigen Ausführung taucht im bestimmungsgemäßen Montagezustand des Schnellwechselfutters an dem Bearbeitungsgerät eine Abtriebsspindel des Bearbeitungsgeräts, die zur Kraftübertragung auf das Einsteckwerkzeug eingerichtet ist, in den Stellkörper oder zumindest in die Verriegelungshülse ein. D. h. der Stellkörper und/oder die ggf. vorhandene separate Verriegelungshülse sind dazu eingerichtet, die Abtriebsspindel des Bearbeitungsgeräts aufzunehmen. Optional ist das Schnellwechselfutter auch dazu eingerichtet, nachträglich an einem Bearbeitungsgerät, insbesondere durch Wechsel eines dort verbauten Wechselfutters, angebracht, also "nachgerüstet" zu werden.

Insbesondere aufgrund der vorstehend beschriebenen Anordnung des Schnellwechselfutters am Bearbeitungsgerät ist auch erkennbar, dass der Betätigungskörper im bestimmungsgemäßen Montagezugstand werkzeugseitig zu dem Bearbeitungsgerät angeordnet ist. Dadurch ist eine einfache Betätigung des Schnellwechselfutters möglich. Bspw. kann - bei leerem Schnellwechselfutter - dieses mit dem Betätigungskörper auf eine Oberfläche aufgedrückt werden. Besonders bevorzugt kommt das Schnellwechselfutter in Kombination mit einer Art "Werkzeugköcher" zum Einsatz, in dem ein Einsteckwerkzeug mit seinem Antriebsende hervorstehend gelagert ist. Das Bearbeitungsgerät wird hierbei mit dem Schnellwechselfutter über das Einsteckwerkzeug geschoben, so dass der Betätigungskörper auf einer Abstützfläche, insbesondere einer freien Stirnkante des Werkzeugköchers, aufsitzt und durch Druck auf das Bearbeitungsgerät wechselweise zwischen der Entrieglungs- und Verriegelungsstellung verschoben werden kann.

In einer optionalen Variante ist das oder das jeweilige Einrückelement Teil des Schnellwechselfutters. In einer alternativen Variante ist das oder das jeweilige Einrückelement aber Teil des Bearbeitungsgeräts und bspw. an der Abtriebsspindel, insbesondere in einem korrespondierenden, etwa radial ausgerichteten Durchbruch in der Abtriebsspindel aufgenommen. Insbesondere kommt als Einrückelement eine Kugel zum Einsatz. Alternativ kann es sich bei dem Einrückelement aber auch um einen Federring handeln, der entgegen seiner Federwirkung mittels des Stellkörpers in die Verriegelungsposition verstellt und vorgespannt wird.

In einer weiteren optionalen Variante ist die Abtriebsspindel als Teil des Schnellwechselfutters ausgebildet und zur kraft- und/oder formschlüssigen Kopplung mit einer korrespondierenden Aufnahme des Bearbeitungsgeräts eingerichtet und vorgesehen.

Das erfindungsgemäße Bearbeitungsgerät umfasst das vorstehend beschriebene Schnellwechselfutter.

Das erfindungsgemäße Bearbeitungsgerätesystem umfasst das Bearbeitungsgerät sowie das vorstehend beschriebene Schnellwechselfutter. Außerdem umfasst das Bearbeitungsgerätesystem einen Werkzeughalter zur Vorhaltung mehrerer Einsteckwerkzeuge. Jedes Einsteckwerkzeug ist dabei in dem Werkzeughalter in einem jeweils zugeordneten Werkzeugköcher insbesondere der vorstehend beschriebenen Art angeordnet oder anordenbar. Der jeweilige Werkzeugköcher bildet also auch die Abstützfläche für den Betätigungskörper des Schnellwechselfutters aus.

In einer zweckmäßigen Ausführung weist der Werkzeughalter wenigstens eine Feder auf, die insbesondere in dem oder dem jeweiligen Werkzeugköcher angeordnet ist, und die dazu dient, das Einsteckwerkzeug beim Abheben des Bearbeitungsgeräts für eine vorbestimmte Weglänge - vorzugsweise für etwa fünf Millimeter - aus dem Werkzeugköcher herauszudrücken. Dadurch wird die Verriegelung des Einsteckwerkzeugs im Schnellwechselfutter auf einfache und wiederholbare Weise unterstützt. Die entsprechende Feder übt also zweckmäßigerweise eine aus dem Werkzeughalter, insbesondere aus dem dem jeweiligen Einsteckwerkzeug zugeordneten Werkzeugköcher, gerichtete Ausschubkraft auf das jeweilige Einsteckwerkzeug aus, insbesondere wenn dieses mittels des Bearbeitungsgeräts aufgenommen wird.

Bei dem Bearbeitungsgerät handelt es sich insbesondere um ein handgeführtes Gerät, z. B. einen Handschrauber, der elektrisch oder pneumatisch betreibbar ist. Alternativ handelt es sich bei dem Bearbeitungsgerät um einen sogenannten "stationären" Schrauber, der auch als "Schraubautomat" oder "Einbauschrauber" bezeichnet werden kann. Dieser ist vorzugsweise automatisch betätigt, bspw. mittels eines Manipulators (optional ein Roboterarm).

Im bestimmungsgemäßen Montagezustand des Schnellwechselfutters ist der Gehäusekörper optional mit dem Bearbeitungsgerät verschraubt oder mittels einer Art Bajonettverschluss gekoppelt.

Das Bearbeitungsgerät (mit dem Schnellwechselfutter) sowie das Bearbeitungsgerätesystem weisen insbesondere die gleichen Vorteile sowie auch die gleichen körperlichen Merkmale wie das Schnellwechselfutter auf.

Gemäß dem erfindungsgemäßen Verfahren zum Wechsel des Einsteckwerkzeugs bei dem vorstehend beschriebenen Bearbeitungsgerätesystem wird zunächst das Bearbeitungsgerät mit dem daran montierten Schnellwechselfutter und einem darin gehaltenen Einsteckwerkzeug auf die Abstützfläche des entsprechenden (d. h. diesem Einsteckwerkzeug zugeordneten, insbesondere leeren) Werkzeugköchers aufgedrückt, wodurch der Betätigungskörper axial verschoben wird. Dadurch wird wiederum der Stellkörper axial verschoben sowie verdreht - insbesondere sobald dieser die von dem Führungs- und Positionierungselement vorgegebenen Teilstrecke des Verschiebewegs zurückgelegt hat - und anschließend in seiner Entriegelungsstellung verrastet. Hierbei wird das Einsteckwerkzeug freigegeben, so dass das Einsteckwerkzeug beim Abheben des Bearbeitungsgeräts von dem Werkzeugköcher in diesem verbleibt. Durch anschließendes Aufsetzen des Schnellwechselfutters auf ein neues Einsteckwerkzeug und auf eine entsprechend zugeordnete Abstützfläche des Werkzeughalters wird der Betätigungskörper (abermals) axial verschoben, wodurch auch der Stellkörper axial verschoben sowie verdreht wird. Insbesondere bei Entlastung des Betätigungskörpers wird der Stellkörper anschließend in seiner Verriegelungsstellung festgelegt, so dass das Einsteckwerkzeug durch Einrücken des oder des jeweiligen Einrückelements axial fixiert ist.

Das hier und auch im Folgenden beschriebene Schnellwechselfutter ermöglicht vorteilhafterweise einen besonders einfachen, vorzugsweise einhändigen Werkzeugwechsel. Das Schnellwechselfutter braucht also nicht mit der zweiten Hand betätigt zu werden. Dies ist beispielsweise an einer Fertigungsstraße oder einem Fließband von Vorteil, insbesondere für den Fall, dass Montagepersonal regelmäßig ein Werkstück mit einer Hand hält und mit der anderen Hand das Bearbeitungsgerät führt sowie zumindest einmal einen Werkzeugwechsel durchführen muss.

In einer Variante des vorstehend beschriebenen Verfahrens wird das Bearbeitungsgerät beim Werkzeugwechsel nur mittels einer (einzigen) Hand geführt und betätigt. Die Zuhilfenahme der zweiten Hand (oder einer anderen Person) zur Betätigung des Schnellwechselfutters unterbleibt und ist auch nicht erforderlich.

Die Konjunktion "und/oder" ist hier und im Folgenden insbesondere derart zu verstehen, dass die mittels dieser Konjunktion verknüpften Merkmale sowohl gemeinsam als auch als Alternativen zueinander ausgebildet sein können.

Nachfolgend wird ein Ausführungsbeispiel der Erfindung anhand einer Zeichnung näher erläutert. Darin zeigen:
- Fig. 1: in einer schematischen Seitenansicht ein Bearbeitungsgerät mit einem Schnellwechselfutter,
- Fig. 2: in einer schematischen Schnittansicht das Schnellwechselfutter,
- Fig. 3, 4: in einer schematischen Seitenansicht das Schnellwechselfutter in jeweils einer unterschiedlichen Stellung,
- Fig. 5: in Ansicht gemäß Fig. 1 das Bearbeitungsgerät ohne Schnellwechselfutter,
- Fig. 6, 7: in Ansicht gemäß Fig. 2 das Schnellwechselfutter in seinen zwei unterschiedlichen Stellungen, und
- Fig. 8: in einer perspektivischen Darstellung ein Bearbeitungsgerätesystem mit dem Bearbeitungsgerät und einem Werkzeughalter.

Einander entsprechende Teile sind in allen Figuren stets mit gleichen Bezugszeichen versehen.

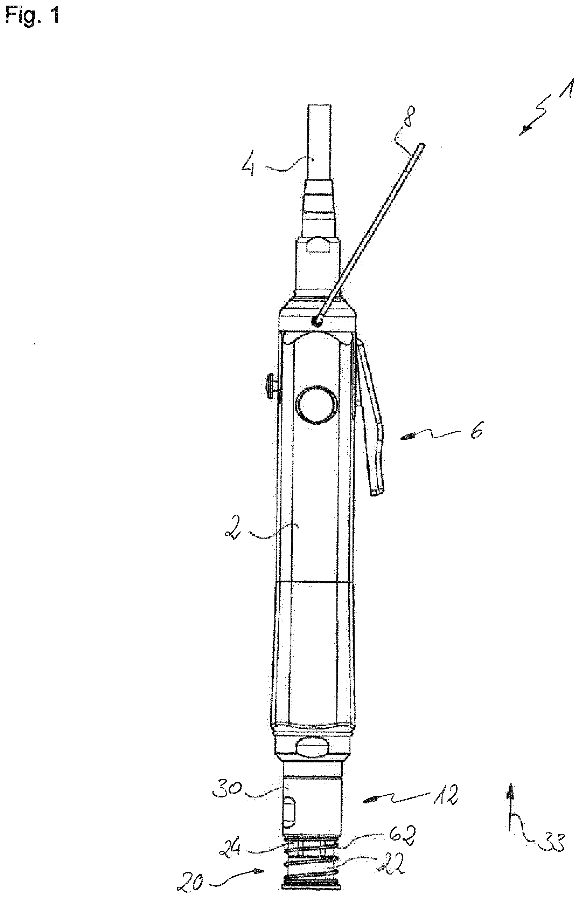

In Fig. 1 ist schematisch ein Bearbeitungsgerät, hier in Form eines Handschraubers 1, abgebildet. Der Handschrauber 1 weist einen Griffkörper 2 auf, in dem ein nicht näher dargestellter Elektromotor angeordnet ist. Anschlussseitig weist der Handschrauber 1 ein Anschlusskabel 4 auf, mittels dessen dem Elektromotor im bestimmungsgemäßen Betrieb die entsprechend erforderliche Betriebsenergie zugeführt wird. Außerdem weist der Handschrauber 1 einen Schalter 6 zur Betätigung des Elektromotors auf. Um den Handschrauber 1 bei Nichtgebrauch verstauen, bspw. aufhängen, zu können, ist an dem Grundkörper 2 außerdem ein Aufhängebügel 8 angeordnet.

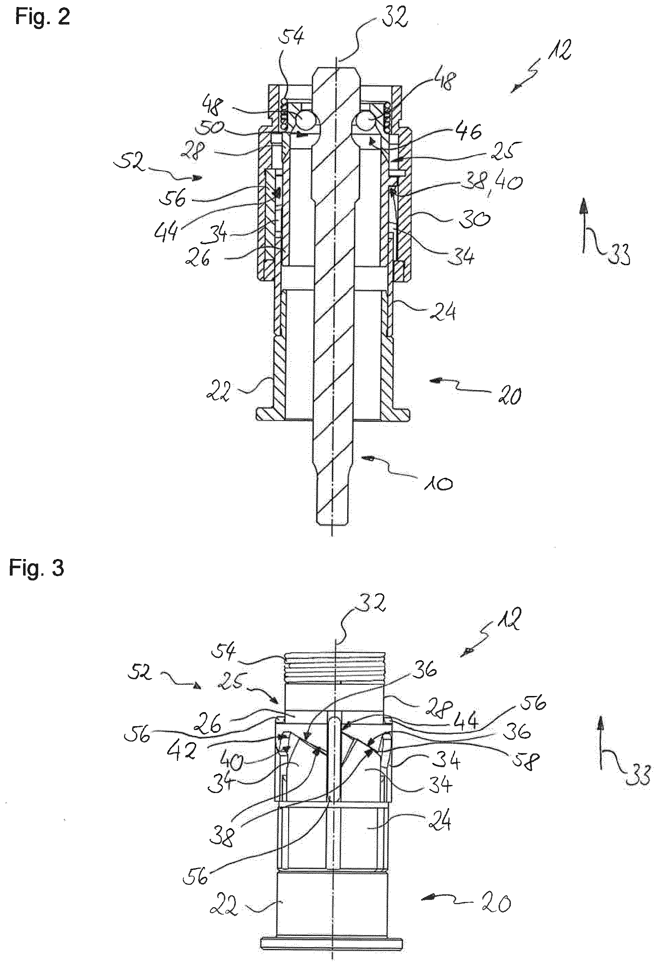

Um im Betrieb des Handschraubers 1 möglichst einfach ein Einsteckwerkzeug, beispielsweise einen als "Bit 10" bezeichneten Innensechskant-Schlüssel (s. Fig. 2, 6-8) oder dergleichen, wechseln zu können, weist der Handschrauber 1 außerdem ein Schnellwechselfutter (im Folgenden kurz als "Futter 12" bezeichnet) auf. Dieses Futter 12 ist wie nachfolgend dargelegt dazu eingerichtet und vorgesehen, einen Werkzeugwechsel mit nur einer Hand und ohne den Handschrauber 1 aus der Hand zu legen zu ermöglichen.

In Fig. 2-4 ist das Futter 12 in einem Schnitt sowie in einer Seitenansicht schematisch näher dargestellt. Das Futter 12 umfasst einen im bestimmungsgemäßen Anbauzustand (auch: Montagezustand) am Handschrauber 1 werkzeugaufnahmeseitig angeordneten Betätigungskörper 20, der in eine Druckhülse 22 und eine mit dieser starr verbundenen Spindelhülse 24 unterteilt ist. Des Weiteren umfasst das Futter 12 einen Stellkörper 25 in Form einer sogenannten Drehhülse 26 und einer Verriegelungshülse 28. Das Futter 12 umfasst außerdem einen Gehäusekörper 30, der ebenfalls hülsenartig aufgebaut ist und in dem die Verriegelungshülse 28 und die Drehhülse 26 sowie die Spindelhülse 24 zum Teil aufgenommen ist. Der Gehäusekörper 30, die Druckhülse 22, die Spindelhülse 24, die Drehhülse 26 sowie die Verriegelungshülse 28 sind dabei koaxial zu einer Werkzeugachse 32 angeordnet, die im bestimmungsgemäßen Aufnahmezustand des Bits 10 auch dessen Längsachse bildet.

Die Spindelhülse 24 weist an ihrem der Druckhülse 22 abgewandten Ende mehrere in Umfangsrichtung verteilte und in einer Referenzrichtung 33 axial vorstehende Zacken oder Zähne 34 auf. Jeder Zahn 34 weist dabei wiederum eine schräg gegenüber der Werkzeugachse 32 angestellte Kontaktfläche 36 auf. Mit dieser Kontaktfläche 36 liegt ein jeder Zahn 34 an einer korrespondierenden (gegengleich schräg gestellten) Kontaktfläche 38 der Drehhülse 26 an. Die Kontaktflächen 38 der Drehhülse 26 sind dabei Teil einer Führungskulisse 40, die außenseitig, d. h. radial vorstehend an der Drehhülse 26 ausgeformt ist. Die Führungskulisse 40 weist dabei neben den Kontaktflächen 38 wechselweise zwischen zwei aufeinanderfolgenden Kontaktflächen 38 eine Wellental-artige Tasche 42 und einen axial verlaufenden Spalt 44 auf.

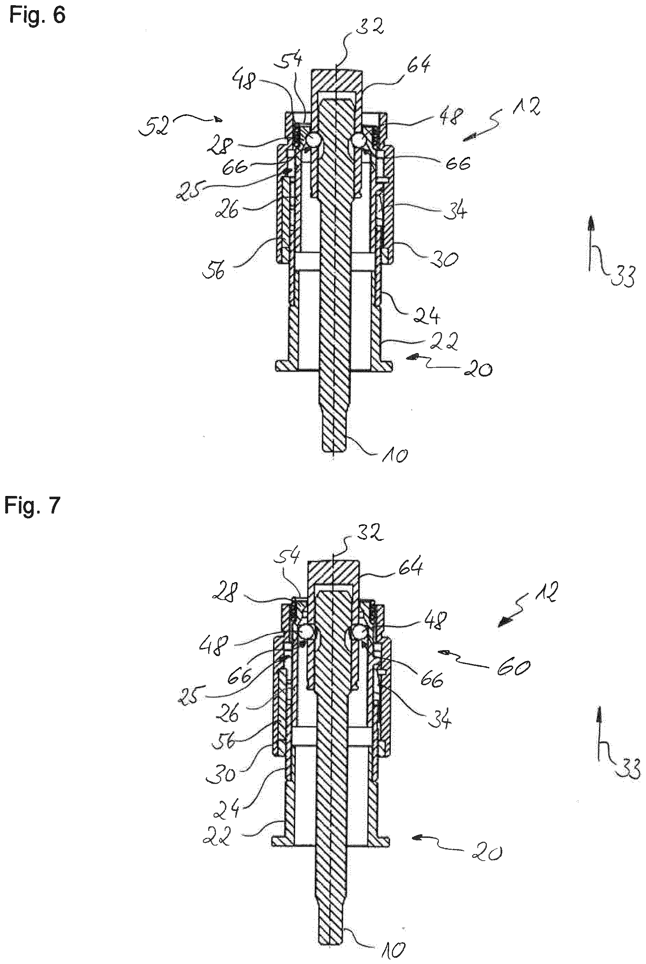

Die Verriegelungshülse 28 weist innenseitig eine trichterartige Durchmesserverringerung 46 auf. Diese ist derart gestaltet, dass der Innendurchmesser der Verriegelungshülse 28 in Referenzrichtung 33 abnimmt. Dadurch wird bei axialer Verschiebung der Verriegelungshülse 28 ein Raum für eine Anzahl von "Einrückelementen", hier in Form von Kugeln 48 vergrößert oder verringert. Bewegt sich die Verriegelungshülse 28 entgegen der Referenzrichtung 33 werden die Kugeln 28 somit von der Innenwand der Verriegelungshülse 28 radial nach innen zur Werkzeugachse 32 hin gedrückt. Die zu verwendenden Bits 10 weisen eine Ringnut 50 auf, in die die Kugeln 48 in einer bestimmungsgemäßen Verriegelungsposition (s. Fig. 2, 6) von der Verriegelungshülse 28 eingedrückt werden und dadurch den Bit 10 axial sichern. In diesem Zustand sind die Verriegelungshülse 28 und die Drehhülse 26 in einer unteren Stellung oder "Verriegelungsstellung 52" angeordnet. Eine Rückstellfeder 54 beaufschlagt hierbei die Verriegelungshülse 28 mit einer in Richtung auf die Druckhülse 22 (also entgegen der Referenzrichtung 33) wirkenden Rückstellkraft. Durch diese Rückstellkraft wird die Verriegelungshülse 28 in der Verriegelungsstellung 52 gehalten. In den schematischen Darstellungen der Fig. 2, 4 und 6 ist die Rückstellfeder 54 ebenfalls nur schematisch dargestellt. Die Rückstellfeder 54 befindet sich hierbei jeweils in einem (zumindest teilweise) entspannten Zustand.

Aufgrund der Schrägstellung der miteinander korrespondierenden Kontaktflächen 36 und 38 der Spindelhülse 24 bzw. der Drehhülse 26 wirkt bei Axialverstellung in Referenzrichtung 33 des Stellkörpers 20 und damit auch der Spindelhülse 24 eine in Umfangsrichtung zur Werkzeugachse 32 gerichtete Kraftkomponente auf die Drehhülse 26. Sind die Verriegelungshülse 28 und die Drehhülse 26 in der Verriegelungsstellung 52 angeordnet, liegt ein Führung- und Positionierungselement, das innenseitig von dem Gehäusekörper 30 vorsteht und konkret durch eine Passfeder 56 gebildet ist, in dem Spalt 44 der Führungskulisse 40 ein. Bei einem Druck auf die Druckhülse 22 in Referenzrichtung 33 unterbindet die im Spalt 44 einliegende Passfeder 56 für einen Teil des gesamten Verschiebewegs der Drehhülse 26 deren Drehung.

Erst wenn eine Kante 58 der Führungskulisse 40 die Passfeder 56 "überwunden" hat, erfolgt eine Drehung der Drehhülse 26 - im dargestellten Ausführungsbeispiel nach rechts - bis die Kante 58 an dem nächsten Zahn 34 anschlägt. Aufgrund einer rotatorischen Entkopplung der Verriegelungshülse 28 von der Drehhülse 26 wird deren Drehung nicht auf die Verriegelungshülse 28 übertragen. Wird daraufhin die Druckhülse 22 entlastet, "schiebt" die Rückstellfeder 54 die Drehhülse 26 wieder zurück. Dabei kommt die Passfeder 56 in Kontakt mit der Führungskulisse 40, die bei fortschreitender Axialverschiebung der Drehhülse 26 entgegen der Referenzrichtung 33 an der Passfeder 26 (unter Drehung der Drehhülse 26) abgleitet bis die Passfeder 26 in der Tasche 42 einliegt. Dadurch ist die Drehhülse 26 und somit auch die Verriegelungshülse 28 in einer axial gegenüber der Verriegelungsstellung 52 in Referenzrichtung 33 versetzten Entriegelungsstellung 60 angeordnet. In dieser Entriegelungsstellung 60 ist die Verriegelungshülse 28 derart gegenüber dem Kugeln 48 verstellt, dass letztere vollständig aus der Ringnut 50 heraus bewegt werden können (s. Fig. 7). Außerdem sind die Verriegelungshülse 28 und die Drehhülse 26 in dieser Entriegelungsstellung 60 axial verrastet.

Bei erneutem Druck auf die Druckhülse 22 wird die Drehhülse 26 erneut in Referenzrichtung 33 verschoben und um einen Zahn 34 "weiter" verdreht. Dadurch liegt die Passfeder 56 wieder in einem Spalt 44 der Führungskulisse 40 ein, sodass bei Entlastung der Druckhülse 22 die Drehhülse 26 sowie die Verriegelungshülse 28 wieder in die Verriegelungsstellung 52 zurück verstellt werden.

Wie in Fig. 1 dargestellt umfasst das Futter 12 auch eine zweite Rückstellfeder 62, die dazu dient, die Druckhülse 22 und somit auch die Spindelhülse 24 stets - d. h. auch bei in der Entriegelungsstellung 60 angeordneter Drehhülse 26 - in der gleichen axialen Position gegenüber dem Gehäusekörper 30 zu halten.

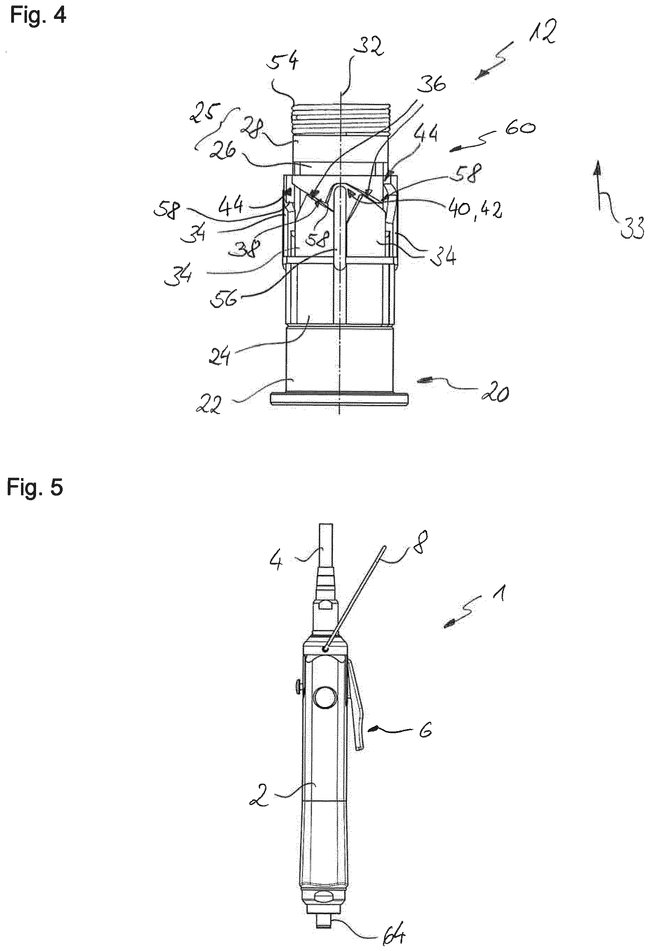

In Fig. 5 ist der Handschrauber 1 ohne das Futter 12 dargestellt. Das Futter 12 ist im bestimmungsgemäßen Montagezustand (s. Fig. 1) auf eine Abtriebsspindel 64 aufgesetzt, in der im bestimmungsgemäßen Einsatzzustand des Bits 10 (s. Fig. 6, 7) dieser zur Übertragung einer Drehbewegung eingesetzt ist. Die Abtriebsspindel 64 ist dabei - wie in Fig. 6 und 7 dargestellt - in die Verriegelungshülse 28 und die Drehhülse 26 eingeschoben. Die Kugeln 48 liegen dabei in korrespondierenden Durchbrüchen 66 der Abtriebsspindel 64 ein und sind somit in ihrer axialen Position festgelegt. Die Rückstellfeder 54 stützt sich in nicht näher dargestellter Weise gegen einen Anschlag des Handschraubers 1 ab.

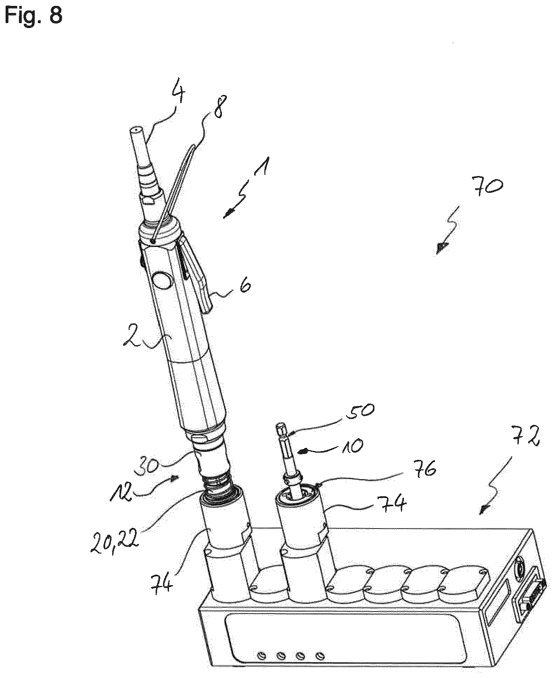

In Fig. 8 ist ein Bearbeitungsgerätesystem 70 näher dargestellt. Dieses umfasst den Handschrauber 1 mit dem daran montierten Futter 12, sowie einen Werkzeughalter 72, der mehrere Werkzeugköcher 74 zur Halterung einzelner Bits 10 aufweist. Von mehreren Aufnahmen für die Werkzeugköcher 74 sind hier nur zwei mit jeweils einem Werkzeugköcher 74 bestückt. Jeder Werkzeugköcher 74 weist dabei eine Abstützfläche 76 auf, auf die die Druckhülse 22 beim Werkzeugwechsel aufgesetzt wird.

Zum Werkzeugwechsel wird dabei der Handschrauber 1 mit dem Futter 12 und einem darin gehaltenen Bit 10 auf den, zu dem montierten Bit 10 korrespondierenden Werkzeugköcher 74 aufgesetzt und die Druckhülse 22 gegen die Abstützfläche 76 gedrückt. Dadurch erfolgt in vorstehend beschriebener Weise die Verstellung der Verriegelungshülse 28 in die Entriegelungsstellung 60, sodass bei Abnahme des Handschraubers 1 von dem Werkzeugköcher 74 der korrespondierende Bit 10 in diesem verbleibt. Auch die Verriegelungshülse 28 verbleibt in ihrer Entriegelungsstellung 60. Anschließend wird der Handschrauber 1 auf den nächsten Bit 10 und somit auf den nächsten Werkzeugköcher 74 aufgesetzt und aufgedrückt. Dabei erfolgt entsprechend die Rückstellung der Verriegelungshülse 28 in die Verriegelungsstellung 52 und damit die Arretierung des "neuen" Bits 10 im Futter 12 sowie in der Abtriebsspindel 64. Eine zwischenzeitliche Verstellung oder Betätigung des Futters 12 ist somit nicht erforderlich.

Der Gegenstand der Erfindung ist nicht auf das vorstehend beschriebene Ausführungsbeispiel beschränkt. Vielmehr können weitere Ausführungsformen der Erfindung von dem Fachmann aus der vorstehenden Beschreibung abgeleitet werden.

### Bezugszeichenliste

- 1: Handschrauber
- 2: Griffkörper
- 4: Anschlusskabel
- 6: Schalter
- 8: Aufhängebügel
- 10: Bit
- 12: Futter
- 20: Betätigungskörper
- 22: Druckhülse
- 24: Spindelhülse
- 25: Stellkörper
- 26: Drehhülse
- 28: Verriegelungshülse
- 30: Gehäusekörper
- 32: Werkzeugachse
- 33: Referenzrichtung
- 34: Zahn
- 36: Kontaktfläche
- 38: Kontaktfläche
- 40: Führungskulisse
- 42: Tasche
- 44: Spalt
- 46: Durchmesserverringerung
- 48: Kugel
- 50: Ringnut
- 52: Verriegelungsstellung
- 54: Rückstellfeder
- 56: Passfeder
- 58: Kante
- 60: Entriegelungsstellung
- 62: Rückstellfeder
- 64: Abtriebsspindel
- 66: Durchbruch
- 70: Bearbeitungsgerätesystem
- 72: Werkzeughalter
- 74: Werkzeugköcher
- 76: Abstützfläche

## Patentansprüche

1. Schnellwechselfutter (12) zur reversiblen Arretierung eines Einsteckwerkzeugs (10) an einem Bearbeitungsgerät (1), aufweisend
- einen hülsenartigen Gehäusekörper (30),
- einen Betätigungskörper (20), der parallel zu einer Werkzeugachse (32) des Einsteckwerkzeugs (10) gegenüber dem Gehäusekörper (30) verschiebbar in diesem gelagert ist,
- einen Stellkörper (25), der mit dem Betätigungskörper (20) in kraftübertragungstechnischem Kontakt steht, wobei der Stellkörper (25) parallel zur Werkzeugachse (32) sowie um diese drehbar gegenüber dem Gehäusekörper (30) verschiebbar in diesem gelagert ist und dazu eingerichtet ist, zumindest im bestimmungsgemäßen Montagezustand an dem Bearbeitungsgerät (1) aufgrund seiner axialen Verschiebung wenigstens ein Einrückelement (48), das zur formschlüssigen, axialen Arretierung des Einsteckwerkzeugs (10) eingerichtet ist, quer zur Werkzeugachse (32) in eine Verriegelungsposition zu verstellen oder zur Verstellung in eine Entriegelungsposition freizugeben,
wobei der Stellkörper (25) dazu eingerichtet ist, bei wiederholter Axialverschiebung durch einhergehende Drehung um die Werkzeugachse (32) wechselweise in einer Entriegelungsstellung (60), in der das oder das jeweilige Einrückelement (48) zur Verstellung in seine Entriegelungsposition freigegeben ist, und in einer gegenüber der Entriegelungsstellung (60) axial versetzten Verriegelungsstellung (52), in der das oder das jeweilige Einrückelement (48) in seine Verriegelungsposition verstellt ist, einzurasten.

2. Schnellwechselfutter (12) nach Anspruch 1,
wobei der Betätigungskörper (20) und der Stellkörper (25) zueinander komplementäre, schräg gegenüber der Werkzeugachse (32) angestellte Kontaktflächen (36,38) aufweisen.

3. Schnellwechselfutter (12) nach Anspruch 1 oder 2,
wobei an dem Gehäusekörper (30) innenseitig ein Führungs- und Positionierungselement (56), insbesondere eine Art Passfeder, angeordnet ist, das die Drehung des Stellkörpers (25) zu einem Teil des axialen Verschiebewegs des Stellkörpers (25) unterbindet und das die Entriegelungsstellung (60) und/oder die Verriegelungsstellung (52) des Stellkörpers (25) axial vorgibt.

4. Schnellwechselfutter (12) nach Anspruch 3,
wobei der Stellkörper (25) außenseitig eine Führungskulisse (40) aufweist, die mit dem Führungs- und Positionierungselement (56) zur Verrastung in der Entriegelungsstellung (60) bzw. der Verriegelungsstellung (52) zusammenwirkt.

5. Schnellwechselfutter (12) nach Anspruch 4,
wobei die oder die jeweilige Kontaktfläche (36) des Stellkörpers (25) Teil der Führungskulisse (40) ist.

6. Schnellwechselfutter (12) nach einem der Ansprüche 1 bis 5,
mit einer Rückstellfeder (54), die den Stellkörper (25) gegen eine axiale Verstellung in Richtung auf die Entriegelungsstellung (60) und die Verriegelungsstellung (52) verspannt.

7. Schnellwechselfutter (12) nach einem der Ansprüche 1 bis 6,
wobei der Gehäusekörper (30), der Betätigungskörper (20) und der Stellkörper (25) zumindest im Wesentlichen als hohle Rotationskörper ausgebildet sind, die im bestimmungsgemäßen Rüstzustand des Einsteckwerkzeugs (10) dieses ringförmig umgeben.

8. Schnellwechselfutter (12) nach einem der Ansprüche 1 bis 7,
wobei der Betätigungskörper (20) axial zweiteilig aufgebaut ist.

9. Schnellwechselfutter (12) nach einem der Ansprüche 1 bis 8,
wobei der Stellkörper (25) zweiteilig aufgebaut ist und eine Drehhülse (26) sowie eine Verriegelungshülse (28) umfasst, wobei die Drehhülse (26) zur Verstellung des oder des jeweiligen Einrückelements (48) auf die direkt auf das Einrückelement (48) wirkende Verriegelungshülse (28) wirkt.

10. Schnellwechselfutter (12) nach einem der Ansprüche 1 bis 9,
wobei im bestimmungsgemäßen Montagezustand des Schnellwechselfutters (12) an dem Bearbeitungsgerät (1) eine Abtriebsspindel (64) des Bearbeitungsgeräts (1), die zur Kraftübertragung auf das Einsteckwerkzeug (10) eingerichtet ist, in den Stellkörper (25) oder zumindest in die Verriegelungshülse (28) eintaucht.

11. Bearbeitungsgerät (1) mit einem Schnellwechselfutter (12) nach einem der Ansprüche 1 bis 10.

12. Bearbeitungsgerätesystem (70) mit einem Bearbeitungsgerät (1) und einem Schnellwechselfutter (12) nach einem der Ansprüche 1 bis 10, sowie mit einem Werkzeughalter (72) zur Vorhaltung mehrerer Einsteckwerkzeuge (10), wobei jedes Einsteckwerkzeug (10) in einem jeweils zugeordneten Werkzeugköcher (74) angeordnet ist, der eine Abstützfläche (76) für den Betätigungskörper (20) aufweist.

13. Bearbeitungsgerätesystem (70) nach Anspruch 12,
wobei der Werkzeughalter (72) eine Feder aufweist, die eine aus dem Werkzeughalter (72), insbesondere dem jeweils zugeordneten Werkzeugköcher (74), gerichtete Ausschubkraft auf das jeweilige Einsteckwerkzeug (10), insbesondere bei Aufnahme dieses Einsteckwerkzeugs (10) mittels des Bearbeitungsgeräts (1), ausübt.

14. Verfahren zum Wechsel eines Einsteckwerkzeugs (10) bei einem Bearbeitungsgerätesystem (70) nach Anspruch 12 oder 13, wobei das Bearbeitungsgerät (1) mit dem daran montierten Schnellwechselfutter (12) und einem darin gehaltenen Einsteckwerkzeug (10) auf die Abstützfläche (76) des entsprechenden Werkzeugköchers (74) aufgedrückt wird, wodurch der Betätigungskörper (20) axial verschoben wird, so dass der Stellkörper (25) axial verschoben sowie verdreht wird und anschließend in seiner Entriegelungsstellung (60) verrastet und das Einsteckwerkzeug (10) freigibt, so dass das Einsteckwerkzeug (10) beim Abheben des Bearbeitungsgeräts (1) von dem Werkzeugköcher (74) in diesem verbleibt, wobei durch anschließendes Aufsetzen des Schnellwechselfutters (12) auf ein Einsteckwerkzeug (10) und auf eine zugeordnete Abstützfläche (76) des Werkzeughalters (72) der Betätigungskörper (20) axial verschoben wird, so dass der Stellkörper (25) axial verschoben sowie verdreht wird und anschließend in seiner Verriegelungsstellung (52) festgelegt wird, so dass das Einsteckwerkzeug (10) durch Einrücken des oder des jeweiligen Einrückelements (48) axial fixiert ist.

## Claims

1. Quick-change chuck (12) for the reversible locking of an insertion tool (10) on a machining device (1), comprising
- a socket-like housing body (30),
- an actuation body (20), which is mounted in the housing body (30) parallel to a tool axis (32) of the insertion tool (10) so as to be displaceable in the said housing body (30),
- an adjusting body (25) which is in force-transmitting contact with the actuation body (20), wherein the adjusting body (25) is displaceably mounted in the housing body (30) parallel to the tool axis (32) and so as to be rotatable about the same relative to the housing body (30) and equipped, at least in the intended mounting state on the machining device (1), because of its axial displacement, to adjust at least one engagement element (48), which is equipped for the positive axial locking of the insertion tool (10), transversely to the tool axis (32) into a locking position or release the same for the adjustment into an unlocking position, wherein the adjusting body (35) is equipped, upon repeated axial displacement, through associated rotation about the tool axis (32) to engage alternately in an unlocking position (60), in which the or the respective engagement element (48) is released for adjustment into its unlocking position, and a locking position (52) that is axially offset relative to the unlocking position (60), in which the or the respective engagement element (48) is adjusted into its locking position.

2. Quick-change chuck (12) according to Claim 1,
wherein the actuation body (20) and the adjusting body (25) comprise contact surfaces (36, 38) inclined relative to the tool axis (32) that are complementary to one another.

3. Quick-change chuck (12) according to Claim 1 or 2,
wherein on the housing body (30) on the inside a guide and positioning element (56), in particular in the manner of a feather key, is arranged, which prevents the rotation of the adjusting body (25) for a part of the axial displacement path of the adjusting body (25) and which axially pre-sets the unlocking position (60) and/or the locking position (52) of the adjusting body (25).

4. Quick-change chuck (12) according to Claim 3,
wherein the adjusting body (25) on the outside comprises a guiding track (40) which interacts with the guide and positioning element (56) for latching in the unlocking position (60) or the locking position (52).

5. Quick-change chuck (12) according to Claim 4,
wherein the or the respective contact surface (36) of the adjusting body (25) is part of the guiding track (40).

6. Quick-change chuck (12) according to any one of the Claims 1 to 5,
having a return spring (54) which tensions the adjusting body (25) against an axial adjustment in the direction of the unlocking position (60) and the locking position (52).

7. Quick-change chuck (12) according to any one of the Claims 1 to 6,
wherein the housing body (30), the actuation body (20) and the adjusting body (25) are at least substantially formed as hollow rotary bodies, which in the intended setup state of the insertion tool (10) annularly surround the same.

8. Quick-change chuck (12) according to any one of the Claims 1 to 7,
wherein the actuation body (20) is constructed axially in two parts.

9. Quick-change chuck (12) according to any one of the Claim 1 to 8,
wherein the adjusting body (25) is constructed in two parts and includes a turning socket (26) and a locking socket (28), wherein the turning socket (26) for the adjustment of the or the respective engagement element (48), directly acts on the locking socket (28) directly acting on the engagement element (48).

10. Quick-change chuck (12) according to one of the Claims 1 to 9, wherein in the intended mounting state of the quick-change chuck (12) on the machining device (1) an output spindle (64) of the machining device (1), which is equipped to transmit force on the insertion tool (10), dips into the adjusting body (25) or at least into the locking socket (28).

11. Machining device (1) having a quick-change chuck (12) according to one of the Claims 1 to 10.

12. Machining device system (70) having a machining device (1) and a quick-change chuck (12) according to one of the Claims 1 to 10, and having a tool holder (72) for holding multiple insertion tools (10), wherein each insertion tool (10) is arranged in a tool quill (74) assigned in each case, which comprises a support surface (76) for the actuation body (20).

13. Machining device system (70) according to Claim 12,
wherein the tool holder (72) comprises a spring which exerts an expulsion force directed out of the tool holder (72) directed in particular to the respective assigned tool quill (74), on the respective insertion tool (10), in particular when picking up this insertion tool (10) by means of the machining device (1).

14. Method for changing an insertion tool (10) in a machining device system (70) according to Claim 12 or 13, wherein the machining device (1) with the quick-change chuck (12) mounted thereon and an insertion tool (10) held therein is pressed onto the support surface (76) of the corresponding tool quill (74), as a result of which the actuation body (20) is axially displaced so that the adjusting body (25) is axially displaced and rotated and subsequently latches into its unlocking position (60) and releases the insertion tool (10), so that the insertion tool (10), when the machining device (1) is lifted off the tool quill (74), remains in the same, wherein by subsequently placing the quick-change chuck (12) onto an insertion tool (10) and on an associated support surface (26) of the tool holder (72), the actuation body (20) is axially displaced so that the adjusting body (25) is axially displaced and rotated and subsequently fixed in its locking position (52), so that the insertion tool (10) through the engaging of the or of the respective engagement element (48) is axially fixed.

## Revendications

1. Mandrin à changement rapide (12) pour le blocage réversible d'un outil à enficher (10) sur un appareil d'usinage (1), présentant
- un corps de boîtier (30) de type douille,
- un corps d'actionnement (20), qui est monté parallèlement à un axe d'outil (32) de l'outil à enficher (10) de manière à pouvoir coulisser par rapport au corps de boîtier (30) dans celui-ci,
- un corps de réglage (25), qui est en contact de transmission de force avec le corps d'actionnement (20), le corps de réglage (25) étant monté parallèlement à l'axe d'outil (32) ainsi que de manière à pouvoir tourner autour de celui-ci, de manière à pouvoir coulisser par rapport au corps de boîtier (30) dans celui-ci, et étant adapté pour, au moins dans l'état de montage conforme sur l'appareil d'usinage (1), en raison de son coulissement axial, déplacer au moins un élément d'enclenchement (48), qui est adapté pour le blocage axial, par complémentarité de forme, de l'outil à enficher (10), transversalement à l'axe d'outil (32) dans une position de verrouillage ou pour le libérer pour le déplacement dans une position de déverrouillage,
le corps de réglage (25) étant adapté pour, lors d'un coulissement axial répété par rotation concomitante autour de l'axe d'outil (32), s'encliqueter alternativement dans une position de déverrouillage (60), dans laquelle le ou chaque élément d'enclenchement (48) est libéré pour le déplacement dans sa position de déverrouillage, et dans une position de verrouillage (52) décalée axialement par rapport à la position de déverrouillage (60), dans laquelle le ou chaque élément d'enclenchement (48) est déplacé dans sa position de verrouillage.

2. Mandrin à changement rapide (12) selon la revendication 1,
dans lequel le corps d'actionnement (20) et le corps de réglage (25) présentent des surfaces de contact (36, 38) complémentaires l'une de l'autre et disposées en oblique par rapport à l'axe d'outil (32).

3. Mandrin à changement rapide (12) selon la revendication 1 ou 2,
dans lequel un élément de guidage et de positionnement (56), notamment un type de clavette parallèle, est agencé sur le côté intérieur sur le corps de boîtier (30), qui empêche la rotation du corps de réglage (25) sur une partie de la course de coulissement axiale du corps de réglage (25) et qui prédéfinit axialement la position de déverrouillage (60) et/ou la position de verrouillage (52) du corps de réglage (25).

4. Mandrin à changement rapide (12) selon la revendication 3,
dans lequel le corps de réglage (25) présente sur le côté extérieur une coulisse de guidage (40) qui coopère avec l'élément de guidage et de positionnement (56) pour l'encliquetage dans la position de déverrouillage (60) ou la position de verrouillage (52).

5. Mandrin à changement rapide (12) selon la revendication 4,
dans lequel la surface de contact ou la surface de contact respective (36) du corps de réglage (25) fait partie de la coulisse de guidage (40).

6. Mandrin à changement rapide (12) selon l'une quelconque des revendications 1 à 5,
avec un ressort de rappel (54) qui précontraint le corps de réglage (25) contre un déplacement axial en direction de la position de déverrouillage (60) et de la position de verrouillage (52).

7. Mandrin à changement rapide (12) selon l'une quelconque des revendications 1 à 6,
dans lequel le corps de boîtier (30), le corps d'actionnement (20) et le corps de réglage (25) sont réalisés au moins essentiellement sous forme de corps de rotation creux qui, dans l'état de préparation conforme de l'outil à enficher (10), entourent celui-ci sous forme annulaire.

8. Mandrin à changement rapide (12) selon l'une quelconque des revendications 1 à 7,
dans lequel le corps d'actionnement (20) est construit axialement en deux parties.

9. Mandrin à changement rapide (12) selon l'une quelconque des revendications 1 à 8,
dans lequel le corps de réglage (25) est construit en deux parties et comprend une douille rotative (26) ainsi qu'une douille de verrouillage (28), la douille rotative (26) agissant sur la douille de verrouillage (28) agissant directement sur l'élément d'enclenchement (48) pour le déplacement de l'élément d'enclenchement ou de l'élément d'enclenchement respectif (48).

10. Mandrin à changement rapide (12) selon l'une quelconque des revendications 1 à 9,
dans lequel, dans l'état de montage conforme du mandrin à changement rapide (12) sur l'appareil d'usinage (1), une broche de sortie (64) de l'appareil d'usinage (1), qui est adaptée pour la transmission de force vers l'outil à enficher (10), plonge dans le corps de réglage (25) ou au moins dans la douille de verrouillage (28).

11. Appareil d'usinage (1) avec un mandrin à changement rapide (12) selon l'une quelconque des revendications 1 à 10.

12. Système d'appareil d'usinage (70) avec un appareil d'usinage (1) et un mandrin à changement rapide (12) selon l'une quelconque des revendications 1 à 10, ainsi qu'avec un porte-outil (72) pour la mise à disposition de plusieurs outils à enficher (10), chaque outil à enficher (10) étant agencé dans un carquois d'outil (74) associé respectif, qui présente une surface de soutien (76) pour le corps d'actionnement (20).

13. Système d'appareil d'usinage (70) selon la revendication 12,
dans lequel le porte-outil (72) présente un ressort qui exerce une force d'éjection dirigée depuis le porte-outil (72), notamment depuis le carquois d'outil (74) associé respectif, sur l'outil à enficher (10) respectif, notamment lors de la réception de cet outil à enficher (10) au moyen de l'appareil d'usinage (1).

14. Procédé de changement d'un outil à enficher (10) dans un système d'appareil d'usinage (70) selon la revendication 12 ou 13, dans lequel l'appareil d'usinage (1) avec le mandrin à changement rapide (12) monté sur celui-ci et un outil à enficher (10) maintenu dans celui-ci est pressé sur la surface de soutien (76) du carquois d'outil (74) correspondant, moyennant quoi le corps d'actionnement (20) est coulissé axialement, de telle sorte que le corps de réglage (25) est coulissé axialement et tourné, puis encliqueté dans sa position de déverrouillage (60) et libère l'outil à enficher (10), de telle sorte que l'outil à enficher (10) reste dans l'appareil d'usinage (1) lorsque celui-ci est soulevé du carquois d'outil (74), le corps d'actionnement (20) étant coulissé axialement par la disposition ultérieure du mandrin à changement rapide (12) sur un outil à enficher (10) et sur une surface de soutien associée (76) du porte-outil (72), de telle sorte que le corps de réglage (25) est coulissé axialement et tourné, puis immobilisé dans sa position de verrouillage (52), de telle sorte que l'outil à enficher (10) est fixé axialement par enclenchement de l'élément d'enclenchement ou de l'élément d'enclenchement respectif (48).
